Europäisches Patentamt

European Patent Office

Office européen des brevets

(19)

(11) Publication number: **0 078 060**
**B1**

## EUROPEAN PATENT SPECIFICATION

(12)

(45) Date of publication of patent specification: **28.12.88**

(51) Int. Cl.⁴: **G 11 B 7/08, G 11 B 27/00**

(21) Application number: **82109936.3**

(22) Date of filing: **27.10.82**

(54) Method and apparatus for recovering information from a selected track on a record disc.

(30) Priority: **28.10.81 US 316021**
**21.12.81 US 333236**

(43) Date of publication of application:
**04.05.83 Bulletin 83/18**

(45) Publication of the grant of the patent:
**28.12.88 Bulletin 88/52**

(84) Designated Contracting States:
**AT BE CH DE FR GB IT LI LU NL SE**

(56) References cited:
**EP-A-0 007 199**
**GB-A-2 010 550**
**GB-A-2 034 080**
**GB-A-2 037 460**
**GB-A-2 056 118**
**US-A-4 106 058**

**SMPTE JOURNAL, vol. 86, no. 2, February
1977, pages 80-83, Scarsdale, USA, M.
MATHIEU: "A random access system adapted
for the optical videodisc: Its impact on
information retrieval"**

(73) Proprietor: **DISCOVISION ASSOCIATES**
**3300 Hyland Avenue**
**Costa Mesa California 92626 (US)**

(72) Inventor: **Giddings, Gary Michael**
**25062 Linda Vista Drive**
**Laguna Hills California 92653 (US)**

(74) Representative: **Fleuchaus, Leo, Dipl.-Ing. et al
Fleuchaus & Wehser Melchiorstrasse 42
D-8000 München 71 (DE)**

(56) References cited:
**PATENTS ABSTRACTS OF JAPAN, vol. 6, no.
137(p-130)(1015), 24th July 1982 & JP-A-
5760541**

# Description

This invention relates generally to a method and an apparatus for moving an information recovery device rapidly to retrieve information recorded on it, and particularly as referred to in the preamble of claims 1 and 8.

In a prior art arrangement (GB—A—2 010 050; EP—A—7199) according to the preamble of claim 1, a reading beam of light is directed at a selected one of a plurality of substantially circular and concentric recording tracks on a rotatable recording disc. The intensity of the beam is modulated by the recorded information, which includes a unique address signal for each track and the apparatus detects the modulated beam to produce a playback signal indicative of the recorded information.

In the search mode, the current address is compared to the target address, and the apparatus applies a prescribed sequence of drive signals to the carriage motor, depending on the remaining distance to the target track. With respect to GB—A—2 010 550 the read head is moved to the vicinity of the target address, which can be on either side of the target track, so that the search may begin after a reversal indirection, that is, after once passing the target track in the coarse search mode. This is wasteful of precious search time. The speed of the carriage motor is stepped successively downwardly as the reading beam reaches predetermined distance thresholds during carriage translation. During the last stage of carriage translation, the movable mirror increments the beam radially by one track spacing during each revolution of the disc, thereby "playing" into the target track.

Whenever the system described above does not have an indication of the track currently being scanned, and thus of the remaining radial distance to the target track, the system will likely not drive the reading beam toward the target track in an optimum fashion. It should therefore be appreciated that there is a need for a system that provides a more accurate indication of the current location of the information recovery device in relationship to the target track and avoids excessive time delays, such that the device can be moved more rapidly in the direction of the target track, without overshooting it. The present invention fulfills this need by the features as claimed in claim 1 and 8. Further developments are features of further sub claims. EP—A—167 177 is a divisional application to the present application.

The present invention is embodied in an apparatus and related method for recovering information from a selected target track of a plurality of substantially circular and concentric recording tracks on a rotatable record disc. The information is recovered by an information recovery device that scans a selected radius of the disc while the disc is being rotated in a prescribed fashion. The recorded information can include, for example, a video signal with a unique address identifying each video frame, and the apparatus then operates to recover a selected target video frame recorded on a target track.

A separate video frame can be recorded on each track, in which case the disc is rotated at a constant angular velocity, regardless of the radius of the track being scanned. Alternatively, the video signal can be recorded with a more uniform recording density, in which case a variable number of frames are recorded on each track and the disc is rotated at an angular velocity that varies inversely with track radius. In this way, the disc moves at the same linear velocity past the information recovery device for all track radii. In the former case, the entire target track records the target video frame, whereas in the latter case, only a segment of the target track records the target frame.

The apparatus includes coarse positioning means for moving the information recovery device at a prescribed radial velocity relative to the disc, in the direction of the target track, and fine positioning means, operable after the coarse positioning means has moved the information recovery device into the vicinity of the target track, for moving the device incrementally from track to track until it reaches the target track.

In accordance with the invention, the fine positioning means moves the information recovery device incrementally accorss a prescribed plurality of tracks during each revolution of the disc, until it reaches the target track. This signficantly reduces the time duration required to move the device to a position where it can recover the information recorded on the target track.

Other aspects and advantages of the present invention will become apparent from the following description of the preferred embodiment.

Brief description of the drawings

Fig. 1 is a simplified block diagram of a signal recovery apparatus embodying the principles of the present invention;

Fig. 2 is a block diagram of the tracking controller block in the apparatus of Fig. 1;

Fig. 3 is a fragmentary cross-sectional view of three tracks on the recording disc of Fig. 1, and showing the open loop tracking error signal produced while the reading beam traverses radially across the tracks;

Fig. 4 is a block diagram of the track scan driver block in the apparatus of Fig. 1;

Fig. 5 is a graph of the radial velocity of the reading beam relative to the rotating disc, as a function of distance from the target track;

Fig. 6 is a flowchart implemented by the apparatus of Fig. 1, for controllably varying the radial speed and direction of the reading beam relative to the disc; and

Fig. 7 is a flowchart implemented by the address recovery and estimator circuit in the apparatus of Fig. 1, for updating the address register indicating the address of the track currently being scanned.

## Description of the preferred embodiment

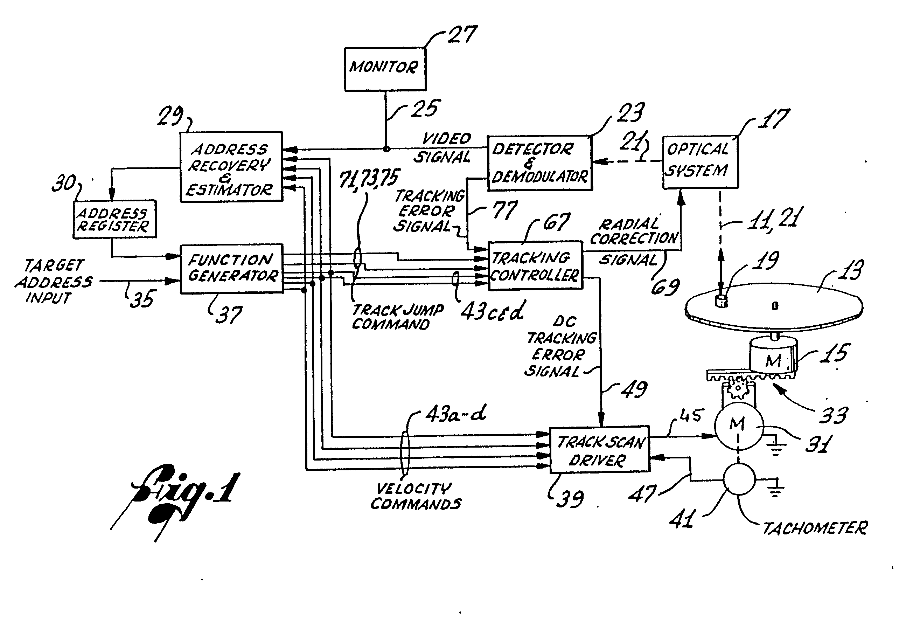

Referring now to the drawings, and particularly to Fig. 1, there is shown apparatus for moving a reading beam of light 11 in a radial direction relative to a rotating recording disc 13, to recover information from a selected target track on the disc. The disc includes a plurality of closely spaced, substantially circular and concentric recording tracks, and each track records a video signal representing one video frame, with a unique frame or track address signal located in each vertical interval (i.e., two address signals per track).

The apparatus includes a spindle motor 15 for rotating the recording disc 13 at a prescribed constant angular velocity, and an optical system 17 and an objective lens 19 for focussing the reading beam 11 onto a selected track of the rotating disc. The reading beam is reflected by the disc, to produce a reflected beam 21 having an intensity that is modulated in accordance with the recorded information. The objective lens and optical system direct this reflected beam to a detector 23, which detects and demodulates the modulated intensity of the beam, to produce a baseband video signal corresponding to the recorded information. This video signal is coupled over line 25 to both a monitor 27 and an address recovery and estimator circuit 29. The monitor provides a real-time display of the video signal recovered from the target track, and the address recovery circuit detects the address signals in the successive vertical intervals of the video signal, using conventional techniques. The address recovery circuit than updates an address register 30 with each detected track address signal.

The apparatus further includes a coarse positioning system and a fine positioning system for controllably moving the reading beam 11 radially relative to the disc 13, toward the selected target track on the disc. The coarse postioning system includes a carriage motor 31 and appropriate gearing 33 for moving the beam at a selected one of two relatively high radial velocities (e.g., 100 and 500 tracks per disc revolution). The fine positioning system includes a movable mirror (not shown) located in the optical system 17 for controllably adjusting the beam's point of impingement on the disc over a relatively small (e.g.,) about 50 tracks in either direction).

When a user desires to recover information recorded on a selected target track on the disc 13, he inputs a special target address code signal on line 35, indicating the target track's address. A function generator 37 compares this target address signal with the address signal currently being stored by the address register 30. In accordance with a prescribed algorithm that will be described below, the function generator determines the radial separation between the current track and the target track, and outputs appropriate control signals to controllably drive the carriage motor 31 and the movable mirror of the optical system 17 so as to move the reading beam 11 toward the target track. These control signals are sequenced such that the beam reaches the target track in a time substantially less than that achieved by prior apparatus of this kind.

In accordance with the invention, the carriage motor 31 is driven at a prescribed velocity (or sequence of velocities) until the reading beam 11 has been moved to within a prescribed number, greater than a fixed number L, of tracks of the target track, after which the movable mirror of the optical system 17 is conditioned to incrementally jump the beam from one track to the next a plurality of times during each half revolution of the disc 13. This technique of moving the beam radially relative to the disc, and in particular moving it incrementally a prescribed plurality of times during each half revolution of the disc, substantially reduces the nominal time required to reach the target track and recover the information recorded on it.

More particularly, the coarse positioning system further includes a track scan driver 39 and a carriage motor tachometer 41 for controllably driving the carriage motor 31 in the prescribed fashion. The function generator 37 outputs a plurality of velocity commands for coupling over lines 43a—d to the track scan driver, which, in turn, controllably adjusts a dc drive signal coupled over line 45 to the carriage motor. The tachometer feeds back to the track scan driver over line 47 a carriage tachometer signal indicating the carriage motor's angular velocity, to enhance control of that velocity. Also, a dc tracking error signal is coupled to the track scan driver over line 49, to controllably move the carriage motor so as to reduce any steady state deflection of the movable mirror of the optical system 17.

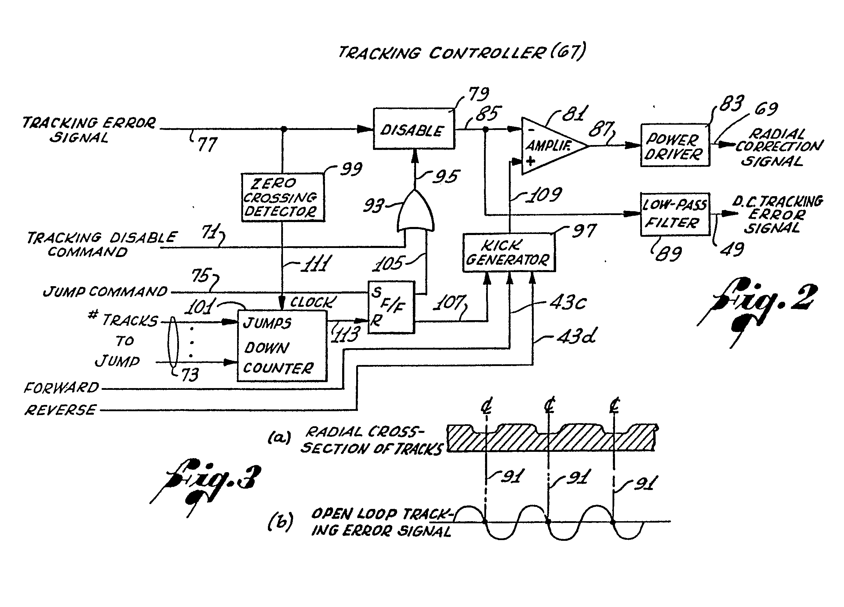

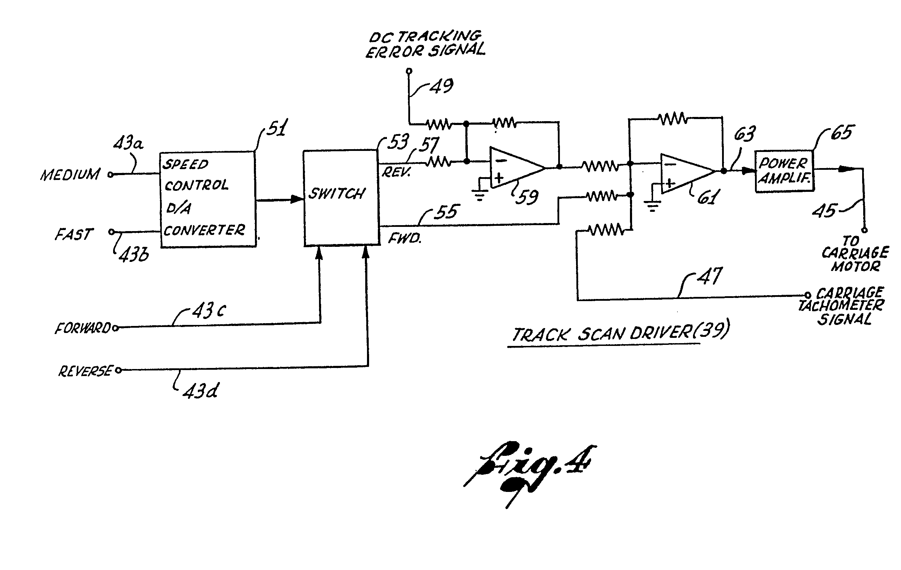

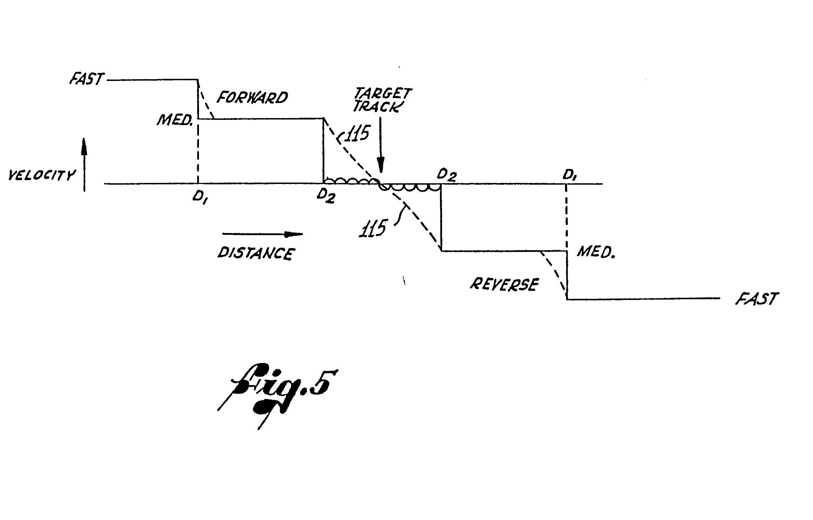

The track scan driver 39 is depicted in greater detail in Fig. 4. It receives the velocity commands on lines 43a—d from the function generator 37 and converts these signals to an appropriate dc drive signal for coupling over line 45 to the carriage motor 31. The driver includes a speed control digital-to-analog (D/A) converter 51 for converting two speed commands, received on lines 43a and 43b, to a corresponding dc voltage signal, and an analog switch 53 for directing the dc signal onto either a forward line 55 or a reverse line 57, in accordance with forward and reverse direction signals received on lines 43c and 43d from the function generator. A first inverting amplifier 59 sums the signal, if any, on the reverse line 57 with the dc tracking error signal supplied on line 49. A second inverting amplifier 61 sums the signal, if any, on the forward line 55 with both the output of the first amplifier 59 and the carriage tachometer signal supplied on line 47 from the tachometer 41. The output of the second amplifier 61 is coupled over line 63 to a power amplifier 65, which produces the carriage motor drive signal for output on line 45.

Referring again to Fig. 1, the fine positioning system further includes a tracking controller 67 for producing a radial correction signal for coupling over line 69 to the movable mirror of the optical system 17. Depending on the operating mode of the apparatus, this signal either maintains the reading beam 11 aligned with a selected target track, or incrementally jumps the beam from track to track while approaching the target track. The tracking controller receives a plurality of track jump commands supplied on lines 71, 73 and 75 from the function generator 37, along with a tracking error signal supplied on line 77 from the detector 23.

When the apparatus is operating in a mode in which the reading beam 11 is to be maintained in alignment with a selected track, the tracking controller 67 merely amplifies the tracking error signal and couples it directly to the movable mirror of the optical system 17, to form a conventional closed loop tracking servo for controllably aligning the beam with the track. On the other hand, when the apparatus is in a search mode in which the beam is to be moved incrementally from track to track, the tracking error signal is uncoupled from the movable mirror, and a prescribed sequence of pulses is coupled in its place. The tracking controller also outputs the dc tracking error signal for coupling over line 49 to the track scan driver 39, so as to reduce any steady state deflection of the movable mirror by moving the carriage motor 31 in the appropriate direction.

The tracking controller 67 is depicted in greater detail in Fig. 2. It includes a disable or switch circuit 79, an amplifier 81 and a power driver 83, for amplifying the tracking error signal supplied on line 77 and outputting it as the radial correction signal for coupling over line 69 to controllably position the movable mirror of the optical system 17 (Fig. 1). The tracking error signal is coupled through the disable circuit at all times except during the search mode of operation. The output of the disable circuit is coupled over line 85 to the negative input terminal of the amplifier, and the output of the amplifier is, in turn, coupled over line 87 to the power driver, which outputs the radial correction signal. The signal output on line 85 by the disable circuit is also coupled to a low-pass filter 89, to produce the dc tracking error signal for coupling on line 49 to the track scan driver 39 (Fig. 1).

At the beginning stage of each search mode of operation, in which the carriage motor 31 moves the reading beam 11 rapidly toward a target track, the tracking error signal experiences wide variations in level as the beam crosses the successive tracks. With reference to Fig. 3, which is a fragmentary cross-sectional view of the disc 13 showing three recording tracks, it will be observed that the open-loop tracking error signal is a large amplitude ac signal having a level of zero at the centerline 91 of each track. The disable circuit 79 uncouples the tracking error signal from the amplifier 81 at this time, to ensure that the apparatus does not attempt to controllably align the reading beam 11 with any track as it moves radially toward the target track.

In the search mode of operation, the coarse positioning system, which includes the carriage motor 31, operates whenever the distance between the target track and the present track exceeds a prescribed threshold, or the prescribed number of tracks and the fine positioning system, which includes the movable mirror of the optical system 17, operates whenever this distance does not exceed the threshold or the number of tracks is less than L. When the coarse positioning system is operating, a tracking disable command is coupled over line 71 from the function generator 37 to the tracking controller 67. This signal is coupled through an OR gate 93, and in turn over line 95 to the disable circuit 79, to uncouple the tracking error signal from the amplifier 81. The radial correction signal output by the tracking controller 67 on line 69 therefore has a level of zero, and the movable mirror remains stationary.

After the reading beam has been moved to a position within a prescribed number L of tracks of the target track, the function generator 37 (Fig. 1) no longer outputs velocity commands to the track scan driver 39, and the carriage motor 31 is no longer driven at a relatively high speed. A prescribed time delay thereafter, the function generator terminates the tracking disable command previously coupled over line 71 to the tracking controller 67, so that the tracking error signal is again coupled through the tracking controller to form the tracking servo loop for controllably aligning the reading beam 11 with whatever recording track the beam arrives at. Thereafter, the tracking controller outputs a prescribed sequence of pulses to jump the reading beam incrementally from track to track, across a plurality of M of tracks, until it reaches the target track.

To effect the incremental jumping, the tracking controller 67 includes a kick generator 97, a zero crossing detector 99, a jumps-down counter 101, and a flip-flop 103. When the incremental jumping is to be initiated, a binary code indicating the number of tracks (e.g., 11 tracks) to be jumped during the next half revolution of the disc 13 is supplied on lines 73 from the function generator 37 and entered into the jumps-down counter. Simultaneously, a jump command signal supplied on line 75 from the function generator is coupled to the set direct input terminal of the flip-flop. This sets the Q output signal into the logical "1" state, and this signal is coupled over line 105 to the OR gate 93, and in turn over line 95 to the disable circuit 79, to open the tracking servo loop.

The $\overline{Q}$ output signal of the flip-flop 103 is coupled over line 107 to the kick generator 97, which responds by outputting a single pulse signal for coupling over line 109 to the positive input terminal of the amplifier 81. This pulse signal is coupled through the amplifier and power driver 83 to the movable mirror of the optical system 17, to accelerate the reading beam 11 in the direction of the target track.

After the reading beam has been accelerated in the direction of the target track by the kick generator 97, the zero crossing detector 99 monitors the open loop tracking error signal (Fig. 3b) supplied on line 77 and outputs a clock pulse each time it detects a track crossing by the beam. These successive clock pulses are coupled over line 111 to the clock terminal of the jumps-down counter 101, to decrement the stored count, accordingly. When the count reaches zero, the counter outputs a reset pulse for coupling over line 113 to the reset direct terminal of the flip-flop 103.

The reset pulse coupled over line 113 to the reset direct terminal of the flip-flop 103 returns the $\bar{Q}$ output signal to the logical "1" state, which triggers the kick generator 97 to output a pulse of opposite polarity to that of the original pulse, thereby decelerating the movable mirror. The reset pulse simultaneously returns the Q output signal of the flip-flop to the logical "O" state, so that the tracking servo loop is no longer disabled by the disable circuit 79 and the loop can again function to controllably align the reading beam 11 with the track then being scanned. During this time, the dc tracking error signal is coupled on line 49 to the track scan driver 39, to controllably move the carriage motor 31 so as to reduce the deflection of the movable mirror.

The reading beam 11 preferably traverses the prescribed number of tracks in substantially less time than that required to rotate the disc 13 through a half revolution. In particular, the beam must traverse tracks at a speed greater than the speed at which track radius changes because of any disc eccentricity.

The kick generator 97 can include two monostable multivibrator or one-shot circuits, one triggered by a positive-going transition and the other by negative-going transition. The kick generator can further include appropriate gating circuits to ensure that the successive pulses it produces have the correct polarity to move the reading beam 11 in the direction of the target track. These gating circuits are responsive to the forward and reverse direction commands supplied on lines 43c and 43d, respectively.

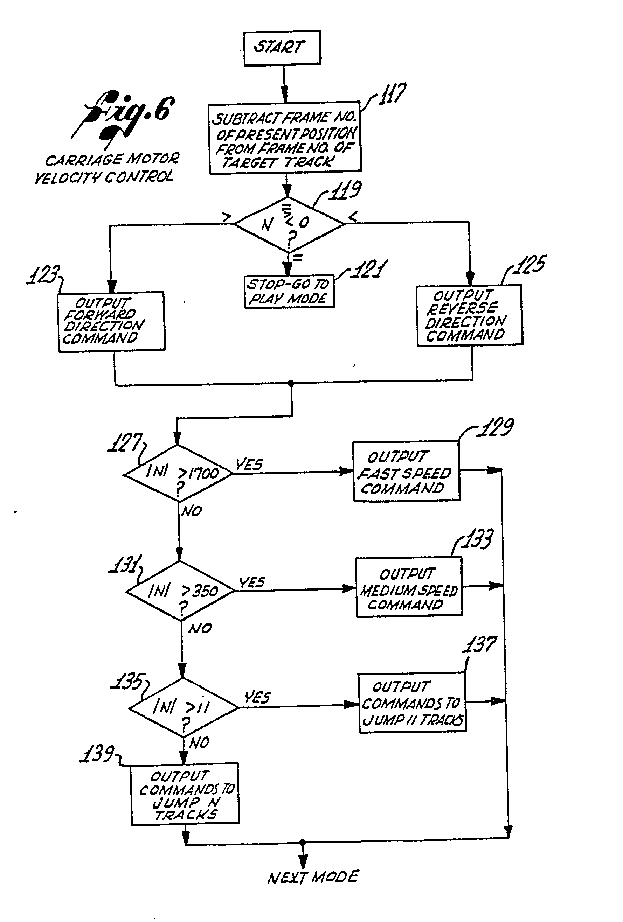

Fig. 5 is a schematic diagram depicting the radial velocity of the reading beam 11 relative to the disc 13, as a function of distance from the target track. As shown in the diagram, if the distance to the target track exceeds a prescribed threshold $D_1$ (e.g., 1700 tracks), the coarse positioning system, which includes the carriage motor 31, drives the beam at a fast speed toward the target track. The apparatus accomplishes this by coupling a fast speed control signal over line 43b from the function generator 37 to the track scan driver 39, which in turn couples a dc drive signal of the appropriate magnitude and direction to the carriage motor.

As soon as the beam crosses the $D_1$ distance threshold, the function generator 37 terminates the fast speed control signal and generates in its place a medium speed control signal for coupling over line 43a to track scan driver 39. This then drives the beam 11 at a medium speed toward the target track. The apparatus continues to drive the beam at that medium speed until the beam has been moved to within a presecribed distance threshold $D_2$ (e.g., 350 tracks), which corresponds to a fixed number L of tracks, from the target track, at which time the function generator terminates the medium speed control signal and the apparatus permits the carriage motor 31 to slow to a stop, as indicated by the dotted line 115. The selection of the particular distance thresholds $D_1$ and $D_2$ is a matter of mere design choice and should be made in accordance with prescribed characteristics of the apparatus such as the size and inertia of the carriage motor, the maximum deflection of the movable mirror, etc.

Special considerations must be made in a system where the video signal is recorded on the disc 13 with a uniform recording density. Since a variable number of frames are recorded on each track, the difference between the address of the video frame currently being scanned and the address of the target frame does not correspond exactly to the number of tracks remaining to be traversed. This frame address difference can be suitably transformed into a precise measure of track separation based on the numbers of frames per track at the pertinent radii. Alternatively, the frame address difference can be used in its present form as a rough estimate of track separation. Also, since the disc must be rotated at an angular velocity inversely proportional to the radius of the track being scanned, the apparatus preferably limits the velocity of the carriage motor 31 in accordance with the capability of the spindle motor 15 to speed up or slow down.

After the carriage motor 31 has stoppped, the tracking servo loop maintains the reading beam 11 aligned with some track in the vicinity of the target track. Thereafter, based on the remaining distance and direction to the target track, the apparatus incrementally jumps the beam toward the target track in a prescribed fashion. If, for example, the beam comes to rest at a track located 69 track spacings short of the target track, the fine positioning system incrementally jumps the beam by eleven track spacings during each of the first six half revolutions of the disc 13, and by three track spacings during the next half revolution, to finally arrive at the target track. Updated track address information is recovered from the disc twice during each revolution, i.e., when the reading beams scans the vertical interval portion of the recorded video signal.

After the reading beam 11 finally reaches the target track, the apparatus can operate, for example, in a stop-motion mode, to scan the track repeatedly and display the recovered video signal. If the successive tracks are arranged in a spiral pattern, the apparatus must jump the beam backward by one track spacing during each disc revolution, preferably during a vertical interval.

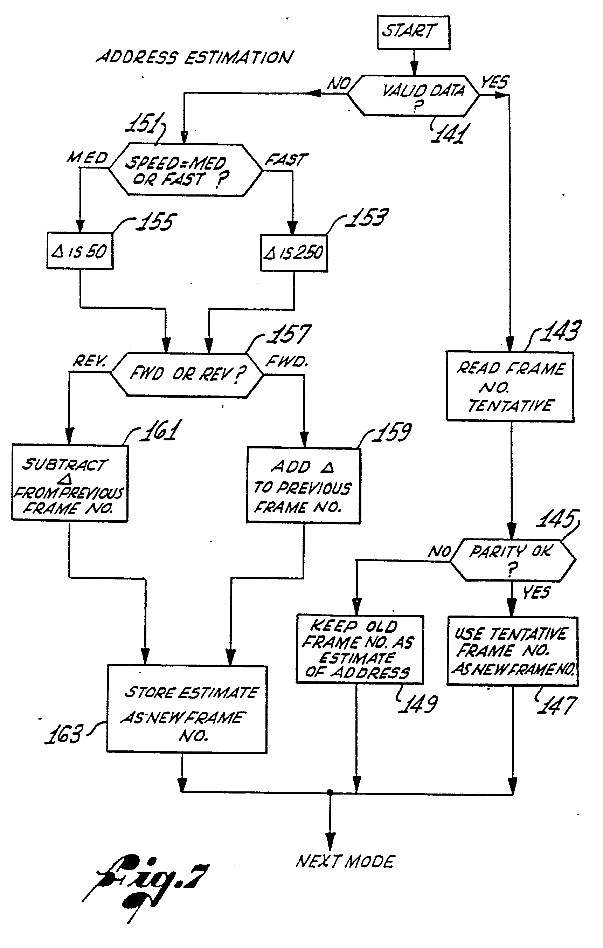

Fig. 6 is a simplified flowchart of the process steps implemented by a microprocessor in the function generator 37 in outputting the velocity and track jump commandes when the apparatus is operating in the search mode. The function generator implements the process once during each half revolution of the recording disc 13, immediately after the address recovery circuit 29 detects an address signal in the vertical interval of the recovered video signal. In an initial step 117, the current track address signal is subtracted from the address of the target track, to produce a number N indicating the number of tracks and direction to the target track. Step 119 then compares this number N to zero. If N equals zero, step 121 instructs the microprocessor to proceed to the play mode of operation. If the number N exceeds zero, step 123 outputs a forward direction command on line 43C, whereas if N is less than zero, step 125 outputs a reverse direction command on line 43d.

If a direction command is output by either of steps 123 or 125, the program proceeds to step 127, in which the absolute value of the number N, i.e., $|N|$, is compared to a distance threshold of $1700(D_1)$. If (N) exceeds this threshold, step 129 outputs a fast speed command signal for coupling over line 43b to the track scan driver 39. On the other hand, if $|N|$ does not exceed the 1700 threshold, the program proceeds to step 131, in which $|N|$ is compared to a distance threshold of 350 $(D_2)$.

If $|N|$ exceeds the threshold, step 133 outputs a medium speed command for coupling over line 43a to the track scan driver 39. On the other hand, if $|N|$ does not exceed the 350 threshold, the program proceeds to step 135, in which $|N|$ is compared to a distance threshold of 11 (M). If $|N|$ exceeds the threshold 11, step 137 outputs a jump command for coupling on line 75 to the tracking controller 67, and simultaneously outputs a binary code for coupling on lines 73 to the tracking controller indicating that the beam should jump by 11 track spacings. On the other hand, if $|N|$ does not exceed the threshold 11, step 139 outputs a jump command on line 75 and simultaneously outputs a binary code on lines 73 indicating that the beam should jump by $|N|$ track spacings. After the respective commandes are output by either of the steps 129, 133, 137, or 139, the program proceeds to the next mode of operation.

As previously mentioned, the address register 30 (Fig. 1) stores the most recently detected track address. This address is ordinarily updated twice during each revolution of the disc 13, i.e., after the reading beam 11 scans the segment of a track recording the vertical interval portion of the video signal. Since the beam sometimes traverses tracks at a relatively high velocity, and since the recorded address code ordinarily includes about 30 to binary bits of information, the address frequently is not properly detected. when this has occurred in the past, prior systems typically continued to move the reading beam at the same velocity as before the address was missed. This frequently caused the beam to overshoot the target track, there by increasing substantially the time required to reach the target track and recover the information recorded on it.

In accordance with another aspect of the invention, the apparatus determines whenever it has failed to properly detect a recorded address signal and updates the address register 30 with an estimate of the address of the track currently being scanned by the reading beam 11. This substantially reduces the likelihood that the beam traverses far beyond the target track, and therefore reduces the average time the apparatus requires to reach the target track and recover the information recorded on it.

Fig. 7 is a simplified flowchart of the process steps implemented by the address recovery and estimator circuit 29 (Fig. 1), in updating the address register 30 with either the most-recently detected current track address or an estimate of the current address. In an initial step 141, each sequence of detected data bits is monitored to determine whether or not it corresponds to a properly recovered address signal. Preferably, each address signal contains about 33 bits of data, including 20 address bits, one parity bit, and 12 "framing" bits, half at the beginning of the signal and half at the end. In particular, step 141 determines whether or not the framing bits correspond to a prescribed code. If they do, the data is presumed to be valid.

If step 141 determines the sequence of data bits to be valid, the program proceeds to step 143, where the 20 address bits are tentatively stored as the correct address of the track then being scanned. Thereafter, step 145 checks the parity of the address bits using the detected parity bit. If parity is correct, step 147 updates the address register with the 20 address bits being tentatively stored. If parity is incorrect, the tentatively stored address bits are discarded, and step 149 retains the previous address in the address register 30. Ideally, if the program had sufficient time, the previous address would instead be updated with an estimate of the current address.

If step 141 determines the sequence of data bits to be invalid, then an address signal has not been preperly recovered and the program proceeds to a series of steps that provide an estimate of the current track address. Specifically, step 151 determines whether a fast speed control signal or a medium speed control signal is being coupled to the track scan driver 39. If a fast signal is being coupled, step 153 defines a variable D to be 250, whereas, if a medium signal is being coupled, step 155 defines D to be 50.

Thereafter, step 157 determines whether a forward direction signal or a reverse direction signal is being coupled to the track scan driver 39. If a forward direction signal is being coupled, step 159 adds the value of D (i.e., either 50 or 250) to the previously stored address, to produce an estimate of the track currently being scanned. On the other hand, if a reverse direction signal is being coupled, step 151 subtracts the value of D from the previously stored address, to produce a current track address estimate. Finally, step 163 stores the address estimate produced in either of steps 159 or 161 in the address register 30, as the current track address.

The track address estimation procedure described above is followed only when the carriage motor 31 is driving the reading beam 11 at a medium or fast speed toward the target track. It is not used thereafter, when the movable mirror of the optical system 17 is incrementally jumping the beam from track to track. If the address recovery circuit 29 fails to properly recover an address signal at that time, the previously detected address is retained in the register 30.

## Claims

1. A method for locating an information containing target track with a read beam of light from a plurality of substantially circular and concentric information containing tracks on a rotatable optical recording disc, the method comprising the steps of:

rotating the disc in a prescribed fashion;

retrieving address information from one of said plurality of tracks to establish a present position for said read beam;

identifying a target track from said plurality of tracks; moving said read beam radially of said disc toward said target track, in a coarse search mode, at a radial velocity greater than the exhibited during normal playback of the disc, from said present position to the vicinity of said target track;

moving said beam radially of said disc in a fine search mode by jumping said read beam towards said target track a prescribed number M of tracks;

retrieving information from the track arrived at upon completion of said jumping step to establish an updated position for said read beam;

repeating said jumping and retrieving steps at least during each revolution of the disc, until said updated position of said read beam is a track number N, less than M, from said target track,

characterized in that then one final step of jumping and retrieving is performed by jumping said read beam a plurality of N tracks to said target track.

2. The method as claimed in claim 1, comprising reading the address information contained in said tracks during said radial movement in said coarse search mode and extracting addresses therefrom; and determining when said beam is in the vicinity of the target track by comparing said extracted addresses with said target address.

3. The method according to claim 2, wherein the step of radially moving in a coarse search mode is terminated after the reading beam has been moved to within a prescribed number, greater than a fixed number L, of tracks from the target track; whereby movement of the reading beam (11) in said coarse positioning step toward said target track defines a search direction and said steps of jumping being also in said search direction.

4. The method as claimed in any of claims 1 to 3, wherein each said track has a unique address associated with it and contained in the information recorded therein, and said retrieving information step performed subsequent to said jumping step includes the steps of:

reading the information contained in said arrived at track;

extracting the address of said arrived at track from the read information; and

determining when said updated position of said read beam is at said target track; and when applicable, determining the number N, by comparing said extracted address with the address associated with said target track.

5. The method as defined in claim 1, characterized in that the step of jumping includes, for each incremental movement, the steps of: radially accelerating the reading beam relative to the disc, in the direction of the target track; counting the number of tracks crossed by the reading beam; and terminating radial movement of the reading beam relative to the disc, after the beam has crossed each of said prescribed plurality M or N of tracks.

6. The method as defined in claim 5, characterized in that the step of counting includes steps of: presetting the number M into a decrementing counter; detecting when the reading beam moves across a track, and decrementing the counter by one count at that time; and generating a termination signal to trigger the step of terminating when the count in the decrementing counter reaches zero; continuing said presetting, detecting and generating steps a number of times until said reading beam reaches said one of two position; and if said reading beam reaches said other position presetting the number N into the decrementing counter, and performing said detecting and generating steps.

7. The method as defined in claim 1, characterized in that: the method further includes a step of monitoring the playback signal, to detect and extract periodically a current track address signal indicating the address of the track currently being scanned; and the step of terminating includes a step of comparing the current track address signal with the signal indicating the target track address signal, to determine whether or not the reading beam is positioned within the prescribed number of tracks of the target track.

8. Apparatus for locating an information containing a target track with a read beam of light from a plurality of substantially circular and concentric information containing tracks on a rotatable optical record disc (13), the apparatus comprising:

means (15) for rotating the disc in a prescribed fashion;

means (17) for scanning the rotating disc with a reading beam (11) to retrieve address information recorded thereon from one of said plurality of tracks to establish a present position for said beam (11);

means (29, 30, 37) for identifying a target track from said plurality of tracks;

beam positioning means (21, 30, 31, 33, 37, 39, 67) operable to controllably radially move the reading beam (11) toward said target track, in a coarse search mode, at a radial velocity greater than that exhibited during normal playback of the disc, from said present position to the vicinity of said target track, said beam positioning means including fine positioning means (17, 67, 69, 97, 101) operable to controllably radially jump the reading beam, in a fine search mode, across a prescribed plurality M of tracks;

means (29, 30, 37) for retrieving information from the track arrived at after said reading beam has been radially moved across said plurality M of tracks, to establish an updated position for said beam, said fine positioning means (17, 67, 69, 97, 101) and said information recovering means (29, 30, 37) repeat said jumping and retrieving step during each revolution of the disc, until said updated position of said read beam is a track number N, less than M, from said target track; characterized in that then said fine positioning means (17,67) operates to finally jump said read beam a plurality of N tracks radially to said target track to retrieve said information from said target track.

9. Apparatus as defined in claim 8, characterized in that the fine positioning means (17, 23, 29, 30 37, 67, 69) includes: means (113, 97, 81, 83, 69) for radially accelerating the radial movement of the reading beam relative to the disc, in the direction of the target track; means (23, 29, 77, 99, 101) for counting the number of tracks crossed by the reading beam; and means (29, 30, 37, 67, 49) for terminating radial movement of the reading beam (11) relative to the disc (13), after the reading beam has crossed each of said prescribed plurality M of tracks, and after the reading beam reaches said target track.

10. Apparatus as defined in claim 9, characterized in that the means for counting includes: a presettable decrementing counter (101); means (37, 73) for presetting the number M into to decrementing counter; means (23, 77, 99, 111) for detecting when the reading beam moves across a track and for decrementing the counter by one count at that time; and means (113) for coupling a termination signal to the means (F/F) for terminating when the count in the decrementing counter reaches zero; means (29, 30, 37, 75, 101, F/F) for cyclically enabling said presetting means, said detecting means, and said coupling means a number of times until said reading beam reaches said one of two positions; and means (23, 29, 30, 37, 73) for presetting the number N into the decrementing counter and enabling said detecting means and said coupling means if said reading beam reaches said other position.

11. Apparatus as defined in claim 8, characterized in that:

the scanning means (17) periodically produces a current track address signal indicating the address of the track currently being scanned; and said information retrieving means (29, 30, 37) includes means (29, 30, 35, 37) for comparing the current track address signal with a signal indicating the target track address, to determine whether or not the reading beam is positioned within the prescribed number of tracks from the target track.

12. Apparatus as defined in claim 8, characterized in that: the scanning means (17, 23, 29) includes means for directing a beam (11) of light at the rotating disc (13), to produce a modulated beam (21) having an intensity that varies in accordance with the recorded information; the coarse positioning means (29, 30, 31, 33, 37, 39, 67) includes motor means (31, 33) for moving the disc radially relative to the beam of light; and the fine positioning means (17, 23, 29, 30, 37, 67, 69) includes beam deflection means for controllably deflecting the beam and thereby adjusting its point of impingement on the disc.

13. Apparatus as defined in claim 12, characterized in that: the scanning means (17, 23, 29) produces a tracking error signal (77) indicating deviation of the beam of light from a selected track; and the fine positioning means (17, 23, 29, 30, 37, 67, 69) is further selectively responsive to the tracking error signal, to controllably align the beam of light with the selected track after each said incremental movement.

**Patentansprüche**

1. Ein Verfahren zum Aufsuchen einer informationsenthaltenden Zielspur mit einem Ausleselichtbündel aus einer Vielzahl von im wesentlichen kreisförmigen und konzentrischen informationsenthaltenden Spuren auf einer drehbaren optischen Aufzeichnungsplatte, wobei in dem Verfahen die Schritte enthalten sind:

Drehen der Platte in einer vorgeschriebenen Weise;

Auslesen von Adreßinformation aus einer der Vielzahl von spruren, um die momentane Position des Ausleselichtbündels zu bestimmen;

Identifizieren einer Zielspur aus der Vielzahl von Spuren;

Verschieben des Ausleselichtbündels radial zur Platte in Richtung auf die Zielspur in einem groben Suchmodus mit einer Radialgeschwindigkeit, die größer ist als die während der normalen Wiedergabe der Platte, von der momentanen Position in die Nachbarschaft der Zielspur;

Verschieben des strahlenbündels radial zur Platte in einem Feinsuchmodus, in dem das Ausleselichtbünel um eine vorgeschriebene Anzahl M von Spuren in Richtung auf die Zielspur springt;

Auslesen der Information aus der Spur, die nach Abschluß des Sprungschrittes erreicht wurde, um eine fortgeschriebene Position des Ausleselichtbündels zu bestimmen;

Wiederholen des Sprung-und Ausleseschritts mindestens während jeder Drehung der Platte, bis die fortgeschriebene Position des Ausleselicht bündels eine Spurnummer N von der Zielspur entfernt liegt, wobei N kleiner ist als M,

dadurch gekennzeichnet, daß dann ein einziger Endschritt des Springens und Auslesens durchgeführt wird, in dem das Ausleselichtbündel sprungweise über eine Vielzahl von N Spuren zur Zielspur geführt wird.

8

2. Das Verfahren nach Anspruch 1, in dem enthalten sind: Auslesen der in den Spuren enthaltenen Information während der radialen Verschiebung im Grobsuchmodus und daraus Extrahieren Von Adressen; und Feststellen, wenn sich das Strahlenbündel in der Nachbarschaft der Zielspur befindet, indem die extrahierten Adressen mit der Zielsprur verglichen werden.

3. Das Verfahren nach Anspruch 2, bei dem der Schritt der radialen Verschiebung im Grobsuchmodus beendet wird, nachdem das Ausleselichtbündel so weit verschoben wurde, daß es innerhalb einer vorbestimmten Anzahl von Spuren von der Zielspur entfernt liegt, wobei die vorbestimmte Anzahl größer ist als eine feste Anzahl L; wodurch die Verschiebung des Ausleselichtbundels (11) während des Schrittes der Grobpositionierung in Richtung auf die Zielspur eine Suchrichtung definiert und die Sprungschritte ebenfalls in der Suchrichtung liegen.

4. Das Verfahren nach irgendeinem der Ansqrüche 1 bis 3, bei dem jede Spur eine eindeutige Adresse aufweist, die zu ihr gehört und in der darin aufgezeichneten Information enthalten ist und der nach dem Sprungschritt durchgeführte Informationsausleschritt die Schritte enthält:

Auslesen der Information, die in der erreichten Spru enthalten ist;

Extrahieren der Adresse der erreichten Spru aus der ausgelesenen Information; und

Feststellen, wenn die fortgeschriebene Position des Ausleselichtbündels auf der Zielspur liegt und gegebenendfalls Feststellen der Anzahl N, indem die extrahierte Adresse mit der zur Zielspur gehörigen Adresse verglichen wird.

5. Das verfahren nach Anspruch 1, dadurch gekennzeichnet, daß der Sprungschritt für jede schrittweise Bewegung die Schritte enthält: radiale Beschleunigung des Ausleselichtbündels relativ zur Platte in Richtung auf die Zielspur; Zählen der Anzahl von Spuren, die vom Ausleselichtbündel überschritten wurden; und Beenden der radialen Bewegung des Ausleselichtbündels relativ zur Platte, nachdem das Lichtbündel jede der vorgeschriebenen Mehrzahl M oder N von Spuren überkreuzt hat.

6. Das Verfahren nach Anspruch 5, dadurch gekennzeichnet, daß der Zählschritt die Schritte enthält: Voreinstellen der Zahl M in einen abwärts zählenden Zähler; Festellen, wenn das Ausleselichtbündel eine Spur überschreitet und Vermindern des Zählers zu dieser Zeit um eine Zähleinheit; und Erzeugen eines Abschlußsignals, um den Schritt des Beendens auszulösen, wenn der Zählstand im abwärts zählenden Zähler den Wert Null erreicht; mehrmaliges Fortsetzen er Schritte des Voreinstellens, Feststellens und Erzeugens, bis das Ausleselichtbündel eine der beiden Positionen erreicht; und, wenn das Ausleselichtbündel die andere Position erreicht, Voreinstellen der Zahl N in den abwärts zählenden Zähler und Durchführen der Schritte des Feststellens und Erzeugens.

7. Das Verfahren nach Anspruch 1, dadurch gekennzeichnet, daß das Verfahren weiter einen Schritt der Überwachung des Wiedergabesignals enthält, um periodisch ein momentanes Spuradreßsignal festzustellen und zu extrahieren, das die Adresse der gerade abgetasteten Spur anzeigt; und daß der Schritt des Beendes einen Schritt enthält, in dem das momentane Spuradreßsignal mit dem Signal verglichen wird, das das Zielspuradreßsignal angibt, um festzustellen, ob das Ausleselichtbündel innerhalb der vorgeschriebenen Anzahl von Spuren um die Zielspur herum liegt.

8. Einrichtung zum Aufsuchen einer informationsenthaltenden Zielspur mit einem Ausleselichtbündel aus einer Vielzahl von im wesentlichen kreisförmigen und konzentrischen informationsenthaltenden Spuren auf einer drehbaren optischen Aufzeichnungsplatte (13), wobei in der Einrichtung enthalten sind:

Vorrichtungen (15) zum Drehen der Platte in einer vorgeschriebenen Wiese;

Vorrichtungen (17) zum Abtasten der rotierenden Platte mit einem Ausleselichtbündel (11), um darauf aufgezeichnete Adreßinformation von einer der Vielzahl von Spuren auszulesen, um eine momentane Position für das Lichtstrahlenbündel (11) zu bestimmten;

Vorrichtungen (29, 30, 37) zum Identifizieren einer Zielspur aus der Vielzahl von Spuren;

Strahlenbündelpositionierungsvorrichtungen (21, 30, 31, 33, 37, 39, 67), die betätigbar sind, um das Ausleselichtbündel (11) gesteuert in radialer Weisse in Richtung auf die Zielspur zu bewegen, in einem Grobsuchmodus mit einer Radialgeschwindigkeit, ide Größer ist als die Während der normalen Wiedergabe von der Platte, von der momentanen Position in die Nachbarschft der Zielspur, wobei die Strahlenbündelpositionierungsvorrichtungen Feinpositionierungsvorrichtungen (17, 67, 69, 97, 101) enthalten, die betätigt werden können, um das Ausleselichtbündel gesteuert in radialer Richtung in einem Feinsuchmodus sprungweise über eine vorgeschriebene Vielzahl M vom Spuren zu bewegen;

Vorrichtungen (29, 30, 37) zum Auslesen von Information aus der Spur, die erreicht wurde, nachdem das Ausleselichtbündel in radialer Richtung über die Vielzahl M vom Spuren geführt wirde, um eine fortgeschriebene Position für das Lichtstrahlenbündel zu bestimmen, wobei die Feinpositionierungsvorrichtungen (17, 67, 69, 97, 101) und die Informationsauslesevorrichtungen (29, 30, 37) den Sprung-und Ausleseschritt während jeder Umdrehung der Platte wiederholen, bis die fortgeschriebene Position des Ausleselichtbündels eine Spurnummer N, die kleiner ist als M, von der Zielspur entfernt liegt; dadurch gekennzeichnet, daß dann die Feinpositionieungsvorrichtungen (17, 67) eingreifen, um schließlich das Ausleselichtbündel eine Vielzahl von N Spuren in radialer Richtung auf die Zielspur sprungweise zu bewegen, um die Information aus der Zielspur auszulesen.

9. Einrichtung nach Anspruch 8, dadurch gekennzeichnet, daß die Feinpositionierungsvorrichtungen (17, 23, 29, 30, 37, 67, 69) enthalten: Vorrichtungen (113, 97, 81, 83, 69) zur radialen Beschleunigung der radialen bewegung des Ausleselichtbündels relative zur Platte in Richtung auf die Zielspur; Vorrichtungen (23, 29, 77, 99, 101) zum Zählen der Anzahl der vom Ausleselichtbündel überquerten Spuren; und Vorrichtungen (29, 30, 37, 67, 49) zum Beendigen der radialen Bewegung des Ausleselichtbündels (11) relativ zur Platte (13), nachdem das Ausleselichtbündel jede der vorgeschriebenen Vielzahl M von Spuren überquert hat und nachdem das Ausleselichtbündel die Zielspur erreicht.

10. Einrichtung nach anspruch 9, dadurch gekennzeichnet, daß die Vorrichtungen zum Zählen enthalten: einen voreinstellbaren abwärts zählenden Zähler (101); Vorrichtungen (37, 73) zum Voreinstellen der Zahl M in den abwärts zählenden Zähler; Vorrichtungen (23, 77, 99, 111) zum Feststellen, wenn das Ausleselichtbündel eine Spur überquert, und zum Vermindern des Zählers um einen Zählstand zu diesem Zeitpunkt; und Vorrichtungen (113) zur Kopplung eines Beendigungssignals an die Vorrichtungen (F/F) zur Beendigung, wenn der Zählstand im abwärts zählenden Zähler den Wert Null erreicht; Vorrichtungen (29, 30, 37, 75, F/F) zur zyklischen Freischaltung der Voreinstelvorrichtungen, der Feststellvorrichtungen und der Kopplungsvorrichtungen so oft, bis das Ausleselichtbündel eine der beiden Positionen erreicht; und Vorrichtungen (23, 29, 30, 27, 73) zum Voreinstellen der Zahl N in den abwärts zählenden Zähler und Freischalten der Feststellvorrichtungen und der Kopplungsvorrichtungen, wenn das Ausleselichtbündel die andere Position erreicht.

11. Einrichtung nach Anspruch 8, dadurch gekennzeichnet, daß
die Abtastvorrichtungen (17) periodisch ein Adreßsignal der momentanen Spur erzeugen, das die Adresse der gerade abgetasteten Spur angibt; und
die Informationsauslesevorrichtungen (29, 30, 37) Vorrichtungen (29, 30, 35, 37) enthalten, um das Adreßsignal der momentanen Spur mit einem Signal zu vergleichen, das die Zielspuradresse angibt, um festzustellen, ob das Ausleselichtbündel innerhalb der vorgeschriebenen Anzahl von Spuren um die Zielspur herum liegt.

12. Einrichtung nach Anspruch 8, dadurch gekennzeichnet, daß die Abtastvorrichtungen (17, 23, 29) Vorrichtungen enthalten, um ein Lichtstrahlenbündel (11) auf die rotierende Platte (13) zu richten und so ein moduliertes Strahlenbündel (21) zu erzeugen, dessen Intensität sich gemäß der aufgezeichneten Information ändert; daß die Grobpositionierungsvorrichtungen (29, 30, 31, 33, 37, 39, 67) einen Motor (31, 33) enthalten, um die Platte in radialer Richtung relative zum Lichtstrahlenbündel zu verschieben, und daß die Feinpositionierungsvorrichtungen (17, 23, 29, 37, 67, 69) Strahlablenkvorrichtungen enthalten, um das Strahlenbündel in gesteuerter Weise abzulenken und dadurch seinen Auftreffpunkt auf der Platte einzustellen.

13. Einrichtung nach Anspruch 12, dadurch gekennzeichnet, daß die Abtastvorrichtungen (17, 23, 29) ein Spurfolgefehlersignal (77) erzeugen, das eine Abweichung des Lichtstrahlenbündels von einer ausgewählten Spur anzeigt; und daß die Feinpositionierungsvorrichtungen (17, 23, 29, 30, 37, 67, 69) weiter selektiv auf das Spurfolgefehlersignal zur ausgewählten Spur nach jeder schrittweisen Bewegung auszurichten.

**Revendications**

1. Procédé pour localiser une piste cible contenant des imformations par un faisceau lumineux de lecture, d'un certain nombre de pistes sensiblement circulaires et consentriques contenant des informations sur un disque d'enregistrement optique rotatif, le procédé comprenant les étapes de:
faire tourner le disque d'une manière prescrite;
récupérer l'information d'adresse de l'une des diverses pistes pour établir une position présente pour ledit faisceau de lecture;
identifier une piste cible de ladite quantité de pistes;
déplacer ledit faisceau de lecture radialement audit disque vers ladite piste cible, en mode de recherche grossier, à une vitesse radiale plus importante que celle présenté pendant une restitution normale du disque, de ladite position présente jusqu'à proximité de ladite piste cible;
déplacer ledit faisceau radialement audit disque en mode de recherche précis en faisant sauter ledit faisceau de lecture vers ladite piste cible sur un nombre M de pistes;
récupérer l'information de la piste à laquelle il est arrivé à la fin de ladite étape de saut pour établir une position remise au point pour ledit faisceau de lecture;
répéter lesdites étapes de saut et de récupération au moins pendant chaque rotation du disque, jusqu'à ce que ladite position remise au point dudit faisceau de lecture soit à un nombre N de pistes, plus faible que M, de ladite piste cible.
caractérisé en ce qu'alors une étape finale de saut et de récupération est accomplie en faisant sauter ledit faiseau de lecture sur un certain nombre N de pistes jusqu'à ladite piste cible.

2. Procédé selon la revendication 1, consistant à lire l'information d'adresse contenue dans lesdites pistes pendant ledit mouvement radial en mode de recherche grossier et à en extraire les adresses; et à déterminer le moment où ledit faisceau est à proximité de la piste cible en comparant lesdites adresses extraites à ladite adresse cible.

3. Procédé selon la revendication 2, où l'étape de déplacer radialement en mode de recherche grossier est terminée après que le faiseau de lecture a été déplacé jusqu'à un nombre prescrit, plus important qu'un nombre fixe L de pistes, de la piste cible, le mouvement du faisceau de lecture (11) dans ladite étape de positionnement grossier vers ladite piste cible définissant une direction de recherche et lesdites étapes de saut étant également dans ladite direction de recherche.

4. Procédé selon l'une quelconqued des revendications 1 à 3, où à chaque piste est associée une adresse unique et contenue dans l'information qui y est enregistrée, et ladite étape de récupération de l'information accomplie subséquemment à ladite étape de saut comprend les étapes de:

lire l'information contenue dans ladite piste à laquelle on est arrivé;

extraire l'adresse de ladite piste à laquelle on est arrivé de l'information de lecture; et

déterminer le moment où ladite position de mise au point duduit faisceau de lecture est à ladite piste cible ; et lorsque cela est applicable, déterminer le nombre n, en comparant ladite adresse extraite à l'adresse associée à ladite piste cible.

5. Procédé selon la revendication 1, caractérisé en ce que l'étape de sauter comprend, pour chaque mouvement incrémentiel, les étapes de: accélérer radialement le faisceau de lecture relativement au disque, dans la direction de la piste cible; compter le nombre de pistes traversées par ledit faisceau de lecture; et terminer le mouvement radial du faisceau de lecture relativement au disque, après que le faisceau ait traversé chacune de la quantité prescrite M ou N de pistes.

6. Procédé selon la revendication 5, caractérisé en ce que l'étape de compter comprend les étapes de: préétablir le nombre M dans un compteur décrémentant; détecter le moment où le faisceau de lecture passe à travers une piste, et diminuer le compteur d'un compte à ce moment; et produire un signal de terminaison pour déclencher l'étape de terminer lorsque le compte dans le compteur décrémentant atteint zéro; continuer lesdites étapes de préétablissement, détection et production un certain nombre de fois jusqu'à ce que ledit faisceau de lecture atteinge l'une des deux positions; et si ledit faisceau de lecture atteint l'autre position, préétablir le nombre N dans le compteur décrémentant et accomplir lesdites étapes de détection et de production.

7. Procédé selon la revendication 5, caractérisé en ce que le procédé comprend de plus une étape de surveiller le signal de resitution, pour détecter et extraire périodiquement un signal d'adresse de piste courante indiquant l'adresse de la piste qui est couramment explorée; et l'étape de terminer comprend une étape de comparer le signal d'adresse de piste courante au signal indiquant le signal d'adresse de piste cible, pour déterminer si le faisceau de lecture est placé ou non au nombre prescrit de pistes de la piste cible.

8. Appareil pour localiser une information contentant une piste cible par un faisceau lumineux de lecture d'un certain nombre de pistes sensiblement circulaires et concentriques contenant des informations sur un disque rotatif d'enregistrement optique (13), l'appareil comprenant:

un moyen (15) pour faire tourner le disque d'une manière prescrite;

un moyen (17) pour explorer le disque rotatif par un faisceau de lecture (11) pour récupérer l'information d'adresse que est enregistrée de l'une desites pistes pour établir une position présente pour ledit faisceau (11);

un moyen (29, 30, 37) pour identifier une piste cible de ladite quantité de pistes;

un moyen de positionnement du faisceau (21, 30, 31, 33, 37, 39, 67) servant à déplacer de manière radialement contrôlable le faisceau de lecture (11) vers ladite piste cible, en mode de rechercher grossier, à une vitesse radiale plus importante que celle présentée pendant une restitution normale du disque, de ladite position présente jusqu'à proximité de ladite piste cible, ledit moyen de positionnement du faisceau comprenant un moyen de positionnement précis (17, 67, 69, 97, 101) servant à faire sauter radialement de manière contrôlable le faisceau de lecture, en mode de recherche précis, à travers une quantité prescrite M de pistes;

un moyen (29, 30, 37) pour récupérer l'information de la piste à laquelle il est arrivé après que ledit faisceau de lecture ait été radialement déplacé à travers ladite quantité M de pistes, pour établir une position remise au point pour ledit faisceau, ledit moyen de positionnement précis (17, 67, 69, 97, 101) et ledit moyen de récupération de l'information (29, 30, 37) répétant ladite étape de saut et de récupération pendant chaque tour du disque, jusqu'à ce que ladite position remise au point dudit faisceau de lecture soit à un nombre N de pistes, plus faible que M, de ladite piste cible; caractérisé en ce qu'alors le moyen de positionnement précis (17, 67) sert à faire finalement sauter ledit faisceau de lecture d'un certain nombre de N pistes radialement jusqu'à ladite piste cible pour récupérer l'information de ladite piste cible.

9. Appareil selon la revendication 8, caractérisé en ce que le moyen de positionnement précis (17, 23, 29, 30, 37, 69) comprend: un moyen (113, 97, 81, 83, 69) pour accélérer radialement le mouvement radial du faisceau de lecture relativement au disque, dans la direction de la piste cible; un moyen (23, 29, 77, 99, 101) pour compter le nombre de pistes traversées par le faisceau de lecture; et un moyen (29, 30, 37, 67, 49) pour terminer le mouvement radial du faisceau de lecture (11) relativement au disque (13), après que le faisceau de lecture a traversé chacune de la quantité prescrite M de pistes, et après que le faisceau de lecture a atteint ladite piste cible.

10. Appareil selon la revendication 9, caractérisé en ce que le moyen pour compter comprend: un compteur décrémentant (101) pouvant être préétabli; un moyen (37, 73) pour préétablir le nombre M dans le compteur décfrmentant; un moyen (23, 77, 99, 111) pour détecter le moment où le faisceau de lecture passe à travers une piste et pour décrémenter le compteur d'un compte à ce moment; et un moyen (113) pour coupler un signal de terminaison au moyen (F/F) pour terminer le moment où le compte dans le compteur décrémentant atteint zéro; un moyen (29, 30, 37, 75, 101, F/F) pour valider cycliquement ledit moyen de préétablissement, ledit moyen de détection et ledit moyen de couplage un certain nombre de fois jusqu'à ce que ledit faisceau de lecture atteigne l'une des deux positions; et un moyen (23, 29, 30, 37, 73) pour préétablir le nombre N dans le compteur décrémentant et valider ledit moyen de détection et ledit moyen de couplage si ledit faisceau de lecture atteint ladite autre position.

11. Appareil selon la revendication 8, caractérisé en ce que:

le moyen d'exploration (17) produit périodiquement un signal d'adresse de piste courante indiquant l'adresse de la piste couramment explorée; et

le moyen de récupération de l'information (29, 30, 37) comprend un moyen (29, 30, 35, 37) pour comparer le signal d'adresse de piste courante à un signal indiquant l'adresse de la piste cible, pour déterminer si oui ou non le faisceau de lecture est placé dans les limites du nombre prescrit de pistes, de la piste cible.

12. Appareil selon la revendication 8, caractérisé en ce que le moyen d'exploration (17, 23, 29) comprend un moyen pour diriger un faisceau (11) de lumière sur le disque en rotation (13) pour produire un faisceau modulé (21) dont l'intensité varie selon l'imformation enregistrée; le moyen de positionnement grossier (29, 30, 31, 33, 37, 39, 67) comprend un moyen formant moteur (31, 33) pour déplacer le disque radialement relativement au faisceau de lumière; et le moyen de positionnement précis (17, 23, 29, 30, 37, 67, 69) comprend un moyen de déviation du faisceau pour dévier de manière contrôlable le faisceau et ainsi ajuster son point d'impact sur le disque.

13. Appareil selon la revendication 12, caractérisé en ce que: le moyen d'exploration (17, 23, 29) produit un signal d'erreur de suivi (77) indiquant un écart du faisceau de lumière par rapport à une piste choisie; et le moyen de positionnement précis (17, 23, 29, 30, 37, 67, 69) est de plus sélectivement sensible au signal d'erreur de suivi, pour aligner de manière contrôlable le faisceau de lumière avec la piste choisie après chaque mouvement incrémentiel.

Fig.1

EP 0 078 060 B1

TRACKING CONTROLLER (67)

Fig.2

Fig.3

(a) RADIAL CROSS-SECTION OF TRACKS

(b) OPEN LOOP TRACK-ING ERROR SIGNAL

MEDIUM — 43a

FAST — 43b

FORWARD — 43c

REVERSE — 43d

SPEED CONTROL D/A CONVERTER — 51

SWITCH — 53, 57 REV., 55 FWD.

DC TRACKING ERROR SIGNAL — 49

59

61

63

POWER AMPLIF. — 65

45 — TO CARRIAGE MOTOR

47 — CARRIAGE TACHOMETER SIGNAL

TRACK SCAN DRIVER (39)

Fig. 4

Fig.5

4

START

*Fig.6*

CARRIAGE MOTOR
VELOCITY CONTROL

117
SUBTRACT FRAME NO.
OF PRESENT POSITION
FROM FRAME NO. OF
TARGET TRACK

119
N < 0
?

121
STOP-GO TO
PLAY MODE

123
OUTPUT
FORWARD
DIRECTION
COMMAND

125
OUTPUT
REVERSE
DIRECTION
COMMAND

127
$|N| > 1700$
?    YES

129
OUTPUT
FAST SPEED
COMMAND

NO

131
$|N| > 350$
?    YES

133
OUTPUT
MEDIUM SPEED
COMMAND

NO

135
$|N| > 11$
?    YES

137
OUTPUT
COMMANDS TO
JUMP 11 TRACKS

NO

139
OUTPUT
COMMANDS TO
JUMP N
TRACKS

NEXT MODE

ADDRESS ESTIMATION

Fig.7

NEXT MODE